# EUROPEAN PATENT SPECIFICATION

(11) **EP 1 284 536 B1**
(45) Date of publication and mention of the grant of the patent: **24.11.2010**
(21) Application number: 01203095.3
(22) Date of filing: 14.08.2001
(51) Int. Cl.: H02G 3/08

(54) **A molded plastic electrical connection box**
Kunststoffvergossene elektrische Verbinderdose
Boîte de connection électrique en matière plastique moulée

(43) Date of publication of application: 19.02.2003
(73) Proprietor: Preflexibel, 9400 Ninove (BE)
(72) Inventor: Van der Poorten, Fons, 9470 Denderleeuw (BE); Wauters, Johan, 9820 Merelbeke (BE)
(74) Representative: Quintelier, Claude

(56) References cited:
- BE-A- 1 011 616
- FR-A- 2 781 616
- US-A- 4 438 859

## Description

The invention relates to a molded plastic electrical connection box having a bottom part and side walls as well as an open top, at least two of said side walls being foldable from a substantially parallel position towards a substantially perpendicular position with respect to said bottom part, each of said side walls comprising first coupling means provided for coupling adjacent side walls together when they are in said substantially perpendicular position, at least two of said side walls comprising second coupling means provided for coupling a further electrical connection box, each of said side walls comprising corner pieces applied at said top and extending inside said connection box substantially parallel with said bottom part when said side walls are in said substantially perpendicular position.

Such an electrical connection box is known from FR-A-2 781 616. The known electrical connection box is used to be built-in in a wall and serves for connecting electrical wires and/or as a support for electrical switches or terminals. The foldable side wall facilitates the manufacturing of the connection box on the one hand and on the other hand makes it easy to remove one or more side walls if the box has to be extended with one or more boxes. The first coupling means enables to couple the adjacent side walls of a same box in order to form the box while the second coupling means is provided for connecting each time a further electrical connection box. The corner pieces are used to point the side walls.

A drawback of the known electrical connection box is that the first coupling means are applied on the lateral upstanding edges of the side wall. Moreover, the second coupling means are formed by large protuberances on the side walls, thus requiring high precision molding and demolding techniques

The object of the invention is to provide a molded plastic electrical connection box that is easy to manufacture and does not require high precision molding and demolding techniques.

A molded plastic electrical connection box according to the invention is therefor characterised in that said corner pieces form part of said first coupling means, and wherein said second coupling means are formed by tenons and mortises applied at edges of said side walls. By incorporating the corner pieces into the first coupling means, the latter are no longer on the lateral upstanding side wall edge, since the corner pieces are applied on top of the box. Since the corner pieces extend inside the box, this signifies that upon molding, in the unfolded position of the side walls, the corner pieces extend upwards, thus making demolding easier. Moreover, the use of tenons and mortises at edges of the side walls enables an easy manufacturing thereof.

A first preferred embodiment of a molded plastic electrical connection box according to the invention is characterised in that said first coupling means further comprises a set of first flaps applied on a peripheral of said bottom part and extending substantially perpendicular thereon in a direction towards said top, said first coupling means further comprises a first set of first hooks applied on an inner side of said side walls and provided to engage each time with one of said first flaps. Since the corner pieces are on top of the box and the first flaps and first hooks are on the bottom of the box, the first coupling means provide a coupling as well on top as on the bottom of the box. This enables a reliable coupling. Since the first flaps are applied on the bottom part, they extend upwards which makes them easy to mold. Moreover, since the first hooks are on the inner side of the side walls, they also extend upwardly during the molding process.

A second preferred embodiment of a molded plastic electrical connection box according to the invention is characterised in that said first coupling means further comprises a second flap applied on an inner side of at least one of said side walls, said first coupling means also comprises a second set of second hooks applied on said bottom part and provided to engage each time with one of said second flaps. The second flaps and hooks complete the first coupling means. Since they extend in an opposite direction with respect to the first flaps and hooks respectively, they enable a strong coupling.

Preferably, said tenons and mortises of a same side wall are diagonally applied in such a manner that two tenons and two mortises are each time located at extremities of a diagonal. A suitable distribution of the tenons and mortises is thus obtained enabling a suitable coupling between different boxes.

A third preferred embodiment of a molded plastic electrical connection box according to the invention is characterised in that at least two of said side walls are provided with at least one substantially cylindrical protrusion extending outwardly from said side wall and having a first diameter, said protrusion being formed by a first series of first wall segments forming a peripheral wall of said protrusion, at least one of said first wall segments being provided with a third hook provided to engage with an outer wall of an electrical tube to be introduced into said protrusion. The use of those protrusions enables to connect electrical tubes to the box. The segmented wall provides some resilience which makes the introduction of the tube easier and enables some clamping. The presence of a third hook enables to firmly clamp the tube end inside the protrusion.

A fourth preferred embodiment of a molded plastic electrical connection box according to the invention is characterised in that inside said protrusion a second series of second wall segments is applied along a circle segment in juxtaposition with a first subset of said first wall segments, said second wall segments being positioned in such a manner as to form with a second subset of said first wall segment a circle with a second diameter smaller than said first diameter, said first and second subset of wall segments being mutually exclusive. In such a manner, electrical tubes with two different diameters can be used while still offering the same attachment properties.

The invention will now be described in more detail with reference to the drawings illustrating a preferred embodiment of a molded plastic electrical connection box according to the invention.

In the drawings :
fig. 1 illustrates a lateral view of a connection box according to the invention;
fig. 2 illustrates one of the side walls and a side of the bottom part of a connection box according to the invention;
fig. 3 illustrates a top view of a connection box according to the invention;
fig. 4 illustrates a connection box according to the invention with the side walls unfolded;
figures 5 to 8 illustrate how a connection box according to the invention is built up;
figure 9 and 10 illustrate how screw blocks can be applied on the electrical connection box according to the invention;
figure 11 illustrates three electrical connection boxes connected together; and
figure 12 to 14 illustrate how electrical connection boxes according to the invention can be connected together by using a bridging element.

In the drawings a same reference sign has been assigned to a same or analogous element.

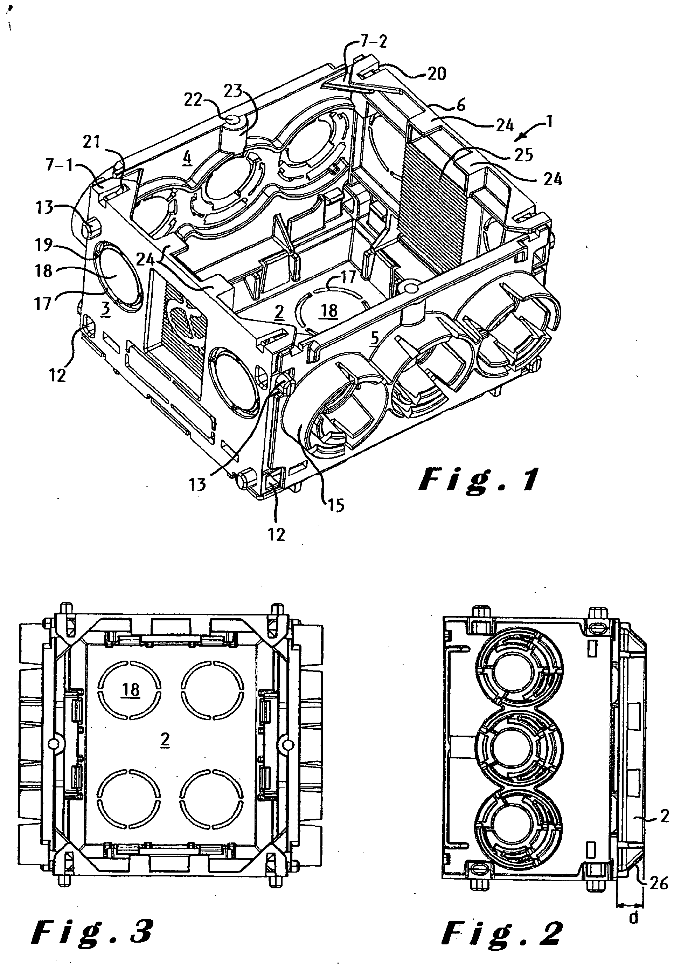

Figure 1 illustrates an example of a molded plastic electrical connection box 1 according to the invention. The box is obtained by molding techniques which enable to easily manufacture the latter. The material used for manufacturing the box is for example PVC, PP or ABS.

The box 1 comprises a bottom part 2 and four side walls 3, 4, 5 and 6 as well as an open top. The side walls 4 and 5 comprise a set of three substantially cylindrical protrusions 15. Of course, the number of three protrusions is merely chosen as an example and it will be clear that more or less protrusions could be applied. Furthermore, only one of the side walls could be provided with such a protrusion 15. The bottom part and the other side walls 3, 6 are provided with one or more openings 17 in which a disc 18 is applied. The disc 18 can be removed by simply breaking the connections 19. The protrusions 15 as well as the openings 17 serve for introducing an electrical tube (not shown) into the box.

The side walls 3, 4, 5 and 6 extend substantially perpendicular with respect to the bottom part. Each of the side walls comprises corner pieces 7-1 and 7-2 applied on their top and extending inside the connection box. The corner pieces form part of first coupling means provided for coupling adjacent side walls together when they extend perpendicularly with respect to the bottom part. The corner pieces 7-2 applied on the side walls 4 and 5 are situated somewhat lower than the corner pieces 7-1 applied on the side walls 3 and 6 in such a manner that they each time overlap each other. The corner piece 7-1 is thereby situated above the corner piece 7-2.

In order to rigidly connect overlapping corner pieces 7-1 and 7-2 with each other and thus provide a solid coupling of the side walls with each other, the corner pieces are preferably provided with clamping means such as a tongue 21 and a recess 20. In the example illustrated in the drawings, the recess 20 is applied on the upper corner piece 7-1 while the tongue 21 is applied on the lower corner piece 7-2. Of course this is merely a choice and other embodiments could also be provided such as for example the recess 20 on corner piece 7-1 and the tongue 21 on corner piece 7-2. Furthermore clamps or hooks could be used instead of tongues and recesses. For manufacturing purpose it is however important that the corner pieces and their clamping means are formed by the same molding process as the rest of the electrical connection box.

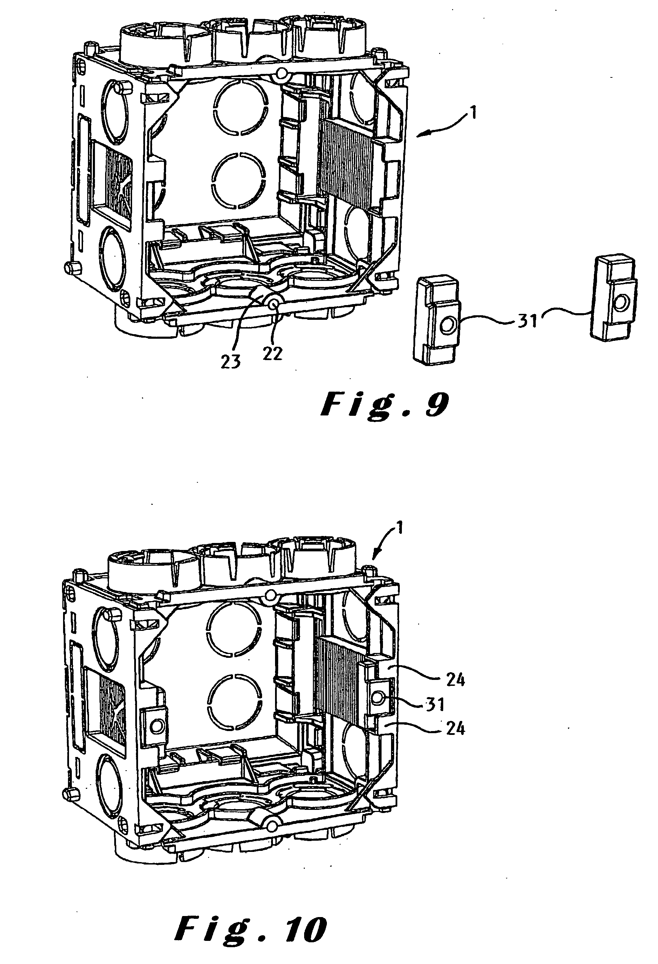

The corner pieces 7-1 and 7-2 are preferably triangularly shaped since this limits the space occupied by them and avoids the presence of sharp angles. However other geometrical shapes are also possible. The corner pieces, besides their coupling function also provide a support for a cover (not shown) which could be applied on top of the box in order to close the latter. Screw holes 22 applied inside further protrusion 23, which are applied on two side walls 4 and 5, enable to fix the cover by means of screws on the box 1. In order not to form an obstacle to a tight closing of the box, the tongues 21 applied on the corner pieces 7-2 preferably do not extend outside the recess 20. Insert members 24 could also be applied on the side walls 3 and 6 in order to insert screw blocks 31 as illustrated in figures 9 and 10. The screw blocks have a comparable function as the screw holes 22 with protrusion 23.

Second coupling means, formed by tenons 13 and mortises 12, are applied on at least two side walls 3 and 6. The second coupling means are provided for coupling, either directly or indirectly, a further electrical connection box. The tenons and mortises of a same side wall are applied on an outer side thereof and preferably diagonally in such a manner that two tenons and two mortises are each time located at extremities of the diagonal. The tenons and mortises are preferably applied somewhat offset of the lateral edge of the side wall in order not to form an obstacle for the electrical conducts to be applied in the openings 17. The tenons and mortises are also preferably applied on a same longitudinal axis. The tenons and mortises preferably have a height, respectively a depth of approximately 3 mm. They are formed by the same material as the rest of the box in such a manner that they are manufactured by the same process.

As illustrated in figure 2, the bottom part of the electrical connection box has chamfered walls 26 which extend over a depth d of approximately 6 mm. The chamfered walls enable an easier build-in of the box in a brick wall. Indeed, in such a manner some tolerance is available for what concerns the walls of the cavity in which the box will be lodged.

A ribbed profile 25 is further applied inside the box on the side walls 3 and 6 which enable to clamp thereon electrical components such as switches or plugs.

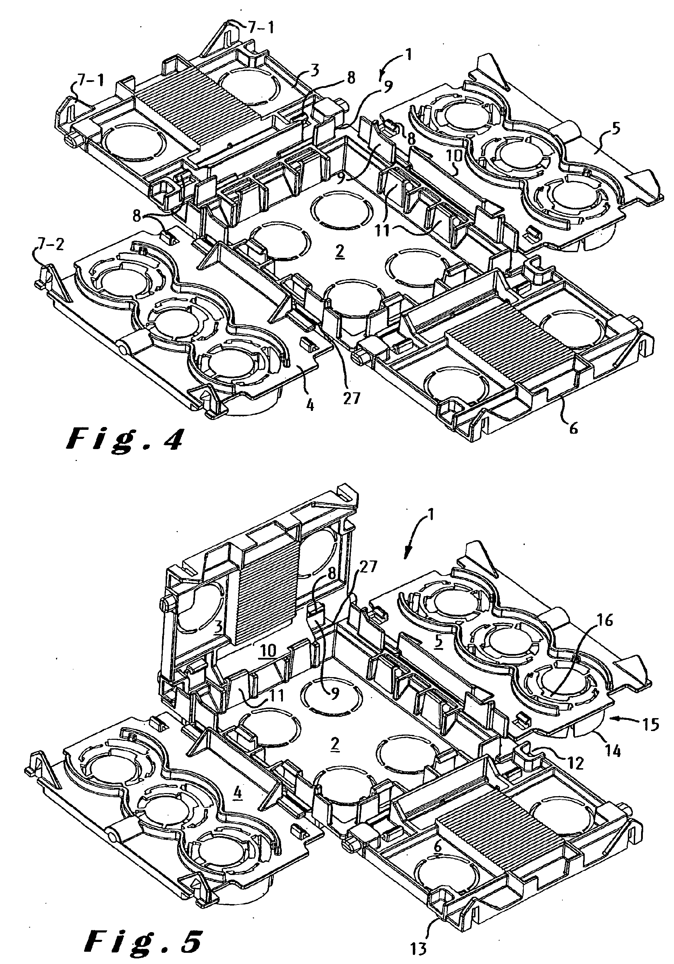

As illustrated in figure 4, the connection box according to the invention is manufactured in an unfolded position i.e. with the side walls 3, 4, 5 and 6 substantially parallel with the bottom part 2. Such a manufacturing renders the molding process much easier since the mold is realised in practically a same surface. The side walls are connected to the bottom part by film hinges 27 obtained by the same molding process for manufacturing the box. The presence of those film hinges enables to pivot the side walls from their position substantially parallel with respect to the bottom part 2 towards a position substantially perpendicular to the bottom part. Furthermore, since the corner pieces 7-1 and 7-2 and the tenons mortises 13, 12 extend perpendicular with respect to the side wall their molding in the unfolded position becomes very easy. Indeed, they can be obtained by cavities applied in the mold profile. The same is applicable for the protrusions 15 applied on the side walls 4 and 5.

As also illustrated in figure 4, the first coupling means further comprise a set of first flaps 9 applied on a peripheral of the bottom part 2 and extending substantially perpendicular thereon in a direction towards the top. The first flaps 9 are applied on the inner side of the box and are obtained by the molding process. The first flaps have preferably a height of 5 mm and a width of 7 mm and are applied each time offset the middle of the side wall. The first flaps co-operate with a first set of first hooks 8 applied on an inner side of the side walls, when the latter are perpendicular to the bottom part. Those first hooks also form part of the first coupling means and are obtained by the molding process for manufacturing the box. As illustrated in figure 4, there are preferably two first flaps and first hooks per side wall.

The first coupling means further comprise a set of second flaps 10 applied on an inner side of the side walls. In the illustrated embodiment each side wall is provided with such a second flap 10. However it could also be possible to apply such a second flap only on one or two of the side walls. In figure 4, the second flap is formed by each time a large flap having a width of 28 mm. However smaller dimensions could be used and the second flap could also be formed by a set of individual flaps. The second flaps co-operate with a second set of second hooks 11 applied on the bottom part and provided to engage each time with one of the second flaps.

Since the second hooks are applied on the bottom part and the first hooks are applied on the side walls, they extend in opposite direction. In such a manner, a more tight coupling is obtained as the hooks exert their coupling force in opposite direction on a same wall.

Preferably, the second hooks are each time applied between two of the first flaps located on a same side wall. The second flaps being each time applied between two first hooks also located on a same side wall. In such a manner, a suitable distribution of first and second flaps and hooks is obtained, leading to an appropriate partition of the forces applied by the first coupling means when the side walls extend perpendicularly to the bottom part.

Although the presence of the flaps and hooks is not absolutely required to obtain a coupling of the side walls between each other, it is nevertheless preferred as it provides a more reliable coupling. The presence of the corner pieces on the top and the hooks and flaps on the bottom part of the box enables a coupling on the top as well as on the bottom part and thus forms a very tight coupling. Of course it is not absolutely necessary to have the first as well as the second hooks and flaps provided and only either the first or the second hooks and flaps could be provided.

For building up the connection box starting from the unfolded position as illustrated in figure 4, there will be started with one of the side walls, for example side wall 3, as illustrated in figure 5. This side wall will be pivoted from its parallel position with respect to the bottom part 2 towards its perpendicular position. Therefore, the side will be pivoted along the axis formed by hinge 27. Once the first 9 and/or second 10 flaps reach their assigned first 8 and/or second 11 hook, the latter will engage over the flap in order to clamp the latter. In order to make this movement easier, the front sides of the hooks 8, 11 are preferably chamfered.

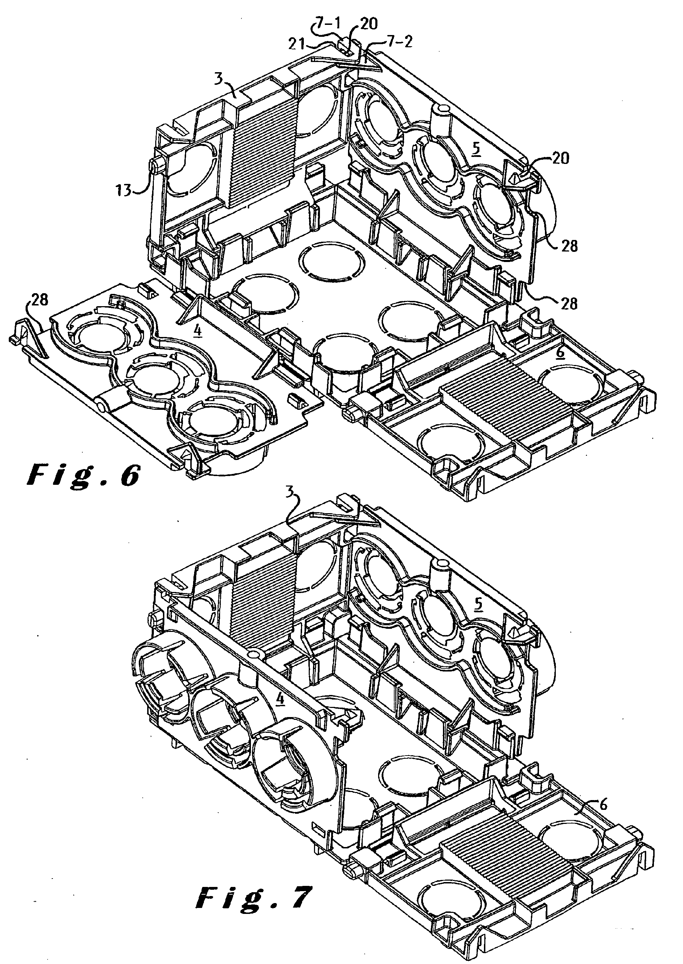

After having raised side wall 3 to its upward position, side wall 5 is pivoted towards its upward position as illustrated in figure 6. In a similar manner as for side wall 3, the first and second hooks engage with the first and second flaps. Furthermore corner piece 7-2 of side wall 5 will, due to the hinge movement, slide under corner piece 7-1 of side wall 3. Thereby the tongue 20 on corner piece 7-2 will reach the recess 21 of corner piece 7-1. This will cause the tongue to click inside the recess, thereby coupling corner piece 7-2 to 7-1 and thus side wall 3 and 5 with each other.

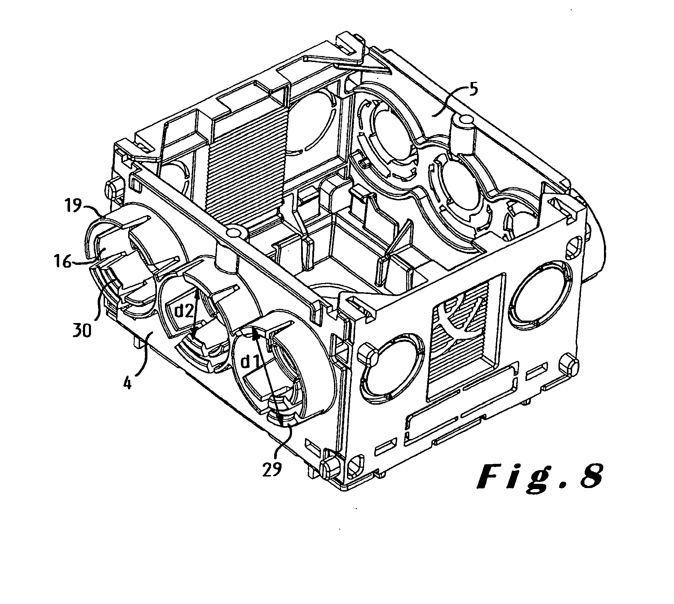

Side wall 4 is thereafter pivoted upwards, as illustrated in figure 7, in order to couple side wall 4 to side wall 3. Thereby the adjacent corner piece of side wall 3 and 4 couple by means of their recess and tongue. Since side wall 3, as well as side wall 5, is provided with a further recess 28, this enables tenon 13, applied on side wall 3, to extend through this further recess 28. Finally, as illustrated in figure 8, side wall 5 is hinged towards its upward position in order to couple the corner pieces of this side wall 5 with those of side walls 3 and 6.

As illustrated in figure 1 and 8, the side walls 4 and 5 are provided with protrusions 15. The protrusions have an essentially cylindrical shape and are provided to introduce and couple an electrical tube. The cylindrical protrusion 15 extends outwardly from the side wall and have a first diameter d1. The protrusion is formed by a first series of first wall segments 14 forming a peripheral wall of the protrusion. In the shown example the peripheral wall is formed by four segments 14. However this number of segments is only given as an example and more or less segments could be formed. The segments provide some flexibility to the protrusion 15 and renders the introduction of an electrical tube more easy. Indeed, the segments enable a slight bending of the segments upon introduction of the electrical tube. Due to their resilience, they will return to their original rest position thereby applying a pressure on the introduced tube.

At least one of the segments is provided with a third hook 29 provided to engage with an outer wall of the introduced electrical tube. This is particularly advantageous when the tube is provided with a ribbed outer surface. In such a manner, the third hook can engage with one of the ribs, thereby clamping the tube end inside the protrusion.

Inside the protrusion 15, there is preferably applied a second series of second wall segments 16, in the present example three second segments. The second wall segments are applied along circle segment in juxtaposition with a first subset of the first wall segments 14. The second wall segments 16 being positioned in such a manner as to form with a second subset of the first wall segment a circle with a second diameter d2 smaller than the first diameter d1. The first and second subset of first wall segments being mutually exclusive. In such a manner, the protrusion is suitable to clamp electrical tubes with a diameter d1 or d2. When tubes of a diameter d1 are used, it is sufficient to remove the second series of wall segments for example by breaking them.

The second series of wall segments also comprises at least one segment provided with a third hook 30 having the same function as third hook 29 applied on the first wall segment.

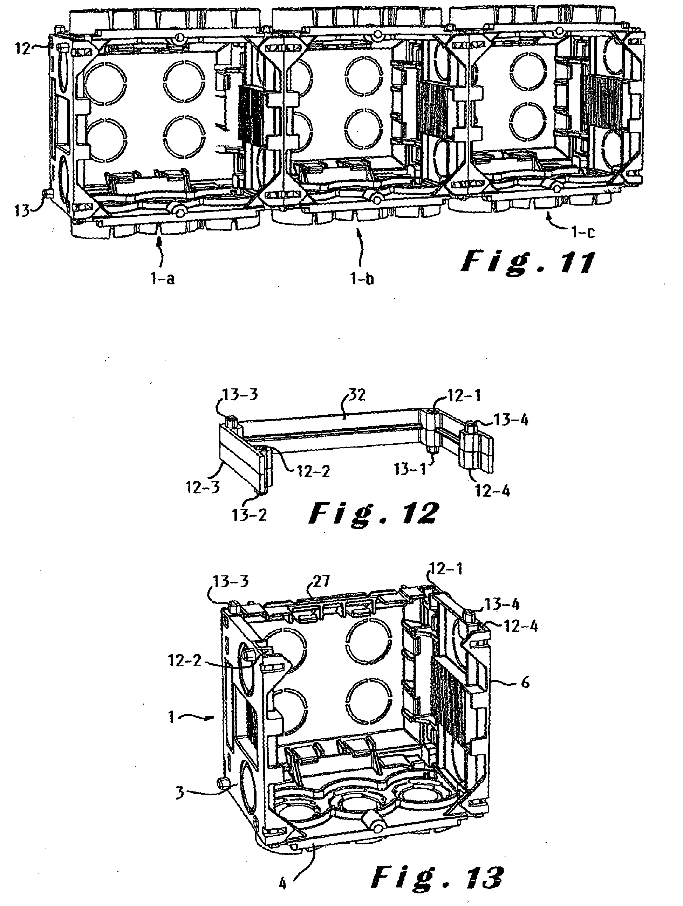

Due to the presence of the second coupling elements 12 and 13, it is possible to couple two or more connection boxes together as illustrated in figure 11. Thereby the tenons 13 of for example side wall 3 of a first connection box 1-a enters the mortises 12 of side wall 6 of a second connection box 1-b. For this purpose, the tenons and mortises of side wall 3 and 6 are applied opposite in such a manner that when a side wall 3 of a first box faces a side wall 6 of a second box, the tenons respectively the mortises of side wall 3 respectively 6 face the mortises respectively the tenons of side wall 3 and 6.

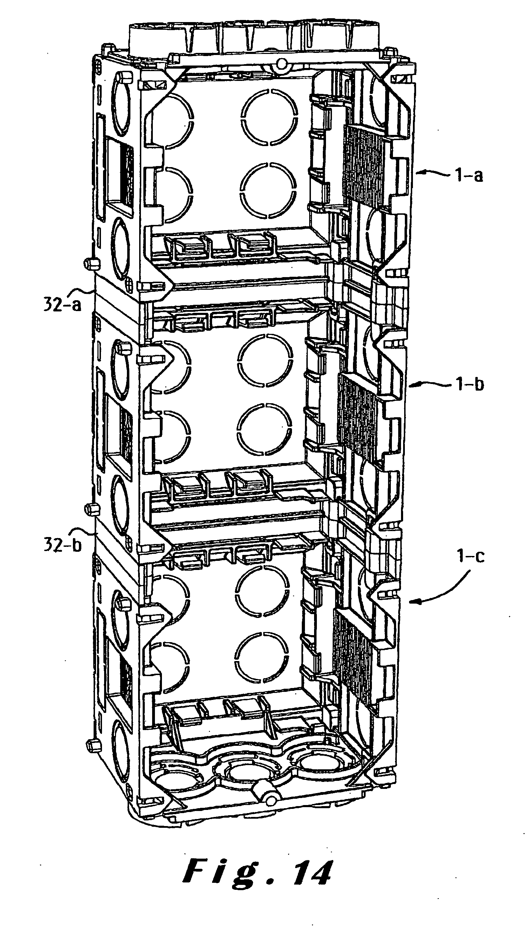

Instead of combining two or more electrical connection boxes by means of their second coupling means 12, 13 applied on the side walls 3 and 6, it is also possible to remove one or more of the side walls and to use a bridging element 32 as illustrated in figure 12 and 13. In the example illustrated in figure 13, side wall 5 has been removed, for example by breaking film hinge 27. The bridging element 32, which is U-shaped and which is dimensioned in such a manner as to match with the circumference of a side wall of the box, comprises tenons 13 and mortises 12. The latter are complementarily applied with respect to a horizontal plane crossing the middle of the bridging element 32. In such a manner, mortises 12-1 and 12-2 are applied opposite tenons 13-1 and 13-2 with respect to this horizontal plane. Mortises 13-1 and 13-2 slide into tenons 12-1 and 12-2 of the box 1 with removed side wall 5 and mortises 13-3 and 13-4 of box 1 slide into tenons 12-3 and 12-4 of the bridging element, when the later is applied on the box. Figure 14 shows an example of three boxes 1-a, 1-b and 1-c coupled together by means of bridging elements 32-a and 32-b. From electrical connection box 1-b as well side wall 4 as 5 have been removed in order to obtain a box with a large inner space.

## Claims

1. A molded plastic electrical connection box (1) having a bottom part (2) and side walls (3,4,5,6) as well as an open top, at least two of said side walls being foldable from a substantially parallel position towards a substantially perpendicular position with respect to said bottom part, each of said side walls comprising first coupling means (7;8,9;10,11) provided for coupling adjacent side walls together when they are in said substantially perpendicular position, at least two of said side walls comprising second coupling means (12,13) provided for coupling a further electrical connection box, each of said side walls comprising corner pieces (7) applied at said top and extending inside said connection box substantially parallel with said bottom part when said side walls are in said substantially perpendicular position, **characterised in that** said corner pieces form part of said first coupling means, and wherein said second coupling means are formed by tenons and mortises applied at edges of said side walls.

2. A molded plastic electrical connection box as claimed in claim 1, **characterised in that** said first coupling means further comprise a set of first flaps (9) applied on a peripheral of said bottom part and extending substantially perpendicular thereon in a direction towards said top, said first coupling means further comprises a first set of first hooks (8) applied on an inner side of said side walls and provided to engage each time with one of said first flaps.

3. A molded plastic electrical connection box as claimed in claim 1 or 2, **characterised in that** said first coupling means further comprises a second flap (10) applied on an inner side of at least one of said side walls, said first coupling means also comprises a second set of second hooks (11) applied on said bottom part and provided to engage each time with one of said second flaps.

4. A molded plastic electrical connection box as claimed in claim 2 and 3, **characterised in that** said second hooks are each time applied between two of said first flaps located on a same side wall and said second flap is each time applied between two of said first hooks located on a same side wall.

5. A molded plastic electrical connection box as claimed in anyone of the claims 1 to 4, **characterised in that** said tenons and mortises of a same side wall are diagonally applied in such a manner that two tenons and two mortises are each time located at extremities of a diagonal.

6. A molded plastic electrical connection box as claimed in anyone of the claims 1 to 5, **characterised in that** at least two of said side walls are provided with at least one substantially cylindrical protrusion (15) extending outwardly from said side wall and having a first diameter, said protrusion being formed by a first series of first wall segments (14) forming a peripheral wall of said protrusion, at least one of said first wall segments being provided with a third hook provided to engage with an outer wall of an electrical tube to be introduced into said protrusion.

7. A molded plastic electrical connection box as claimed in claim 5, **characterised in that** inside said protrusion a second series of second wall segments (16) are applied along a circle segment in juxtaposition with a first subset of said first wall segments, said second wall segments being positioned in such a manner as to form with a second subset of said first wall segment a circle with a second diameter smaller than said first diameter, said first and second subset of wall segments being mutually exclusive.

8. A molded plastic electrical connection box as claimed in claim 7, **characterised in that** at least one of said second wall segments is provided with a fourth hook provided to engage with an outer wall of said electrical tube.

9. A molded plastic electrical connection box as claimed in anyone of the claims 1 to 8, **characterised in that** said corner pieces are provided with either a tongue or a recess, in such a manner that upon coupling they engage two by two with each other.

10. A molded plastic electrical connection box as claimed in anyone of the claims 1 to 9, **characterised in that** said bottom part has bottom walls which are chamfered.

11. A molded plastic electrical connection box as claimed in anyone of the claims 1 to 10, **characterised in that** all side walls are foldably applied on said bottom part.

## Patentansprüche

1. Kunststoffvergossene elektrische Verbinderdose (1) mit einem Bodenteil (2) und Seitenwänden (3, 4, 5, 6) sowie einer offenen Oberseite, wobei wenigstens zwei der Seitenwände von einer im Wesentlichen parallelen Position in eine im Wesentlichen senkrechte Position in Bezug auf den Bodenteil gefaltet werden können, jede der Seitenwände erste Koppelmittel (7; 8, 9; 10, 11) umfasst, die zum Aneinanderkoppeln benachbarter Seitenwände vorgesehen sind, wenn sie in der im Wesentlichen senkrechten Position sind, wenigstens zwei der Seitenwände zweite Koppelmittel (12, 13) umfassen, die zum Ankoppeln einer weiteren elektrischen Verbinderdose vorgesehen sind, jede der Seitenwände Eckstücke (7) umfasst, die an der Oberseite angebracht sind und sich innerhalb der Verbinderdose im Wesentlichen parallel zum Bodenteil erstrecken, wenn die Seitenwände in der im Wesentlichen senkrechten Position sind, **dadurch gekennzeichnet, dass** die Eckstücke einen Teil der ersten Koppelmittel bilden, und wobei die zweiten Koppelmittel durch Zapfen und Zapfenlöcher ausgebildet sind, die an den Kanten der Seitenwände angebracht sind.

2. Kunststoffvergossene elektrische Verbinderdose nach Anspruch 1, **dadurch gekennzeichnet, dass** die ersten Koppelmittel ferner einen Satz von Klappen (9) umfassen, die auf einem Umfang des Bodenteils angebracht sind und sich im Wesentlichen senkrecht darauf in einer Richtung zur Oberseite erstrecken, wobei das erste Koppelmittel ferner einen Satz von ersten Haken (8) umfasst, die auf einer Innenseite der Seitenwände angebracht und so vorgesehen sind, dass sie jeweils in eine der ersten Klappen eingreifen.

3. Kunststoffvergossene elektrische Verbinderdose nach Anspruch 1 oder 2, **dadurch gekennzeichnet, dass** das erste Koppelmittel ferner eine zweite Klappe (10) umfasst, die auf einer Innenseite wenigstens einer der Seitenwände angebracht ist, wobei das erste Koppelmittel außerdem einen zweiten Satz von zweiten Haken (11) umfasst, die auf dem Bodenteil angebracht und so vorgesehen sind, dass sie jeweils in eine der zweiten Klappen eingreifen.

4. Kunststoffvergossene elektrische Verbinderdose nach Anspruch 2 und 3, **dadurch gekennzeichnet, dass** die zweiten Haken jeweils zwischen zweien der ersten Klappen angebracht sind, die sich auf einer gleichen Seitenwand befinden, und die zweite Klappe jeweils zwischen zweien der ersten Haken angebracht ist, die sich auf einer gleichen Seitenwand befinden.

5. Kunststoffvergossene elektrische Verbinderdose nach einem der Ansprüche 1 bis 4, **dadurch gekennzeichnet, dass** die Zapfen und Zapfenlöcher einer gleichen Seitenwand diagonal angebracht sind, derart dass sich zwei Zapfen und zwei Zapfenlöcher jeweils an Endpunkten einer Diagonale befinden.

6. Kunststoffvergossene elektrische Verbinderdose nach einem der Ansprüche 1 bis 5, **dadurch gekennzeichnet, dass** wenigstens zwei der Seitenwände mit wenigstens einem im Wesentlichen zylindrischen Vorsprung (15) versehen sind, der sich von der Seitenwand nach außen erstreckt und einen ersten Durchmesser aufweist, wobei der Vorsprung durch eine erste Reihe von ersten Wandsegmenten (14) ausgebildet ist, die eine Umfangswand des Vorsprungs bilden, wenigstens eines der ersten Wandsegmente mit einem dritten Haken versehen ist, der so vorgesehen ist, dass er in eine Außenwand eines elektrischen Rohres eingreift, das in den Vorsprung einzuführen ist.

7. Kunststoffvergossene elektrische Verbinderdose nach Anspruch 5, **dadurch gekennzeichnet, dass** innerhalb des Vorsprungs eine zweite Reihe von zweiten Wandsegmenten (16) entlang eines Kreissegments in Nebeneinanderstellung mit einem ersten Teilsatz der ersten Wandsegmente angebracht ist, wobei die zweiten Wandsegmente derart positioniert sind, dass sie mit einem zweiten Teilsatz des ersten Wandsegments einen Kreis mit einem zweiten Durchmesser bilden, der kleiner als der erste Durchmesser ist, und der erste und zweite Teilsatz von Wandsegmenten sich gegenseitig ausschließen.

8. Kunststoffvergossene elektrische Verbinderdose nach Anspruch 7, **dadurch gekennzeichnet, dass** wenigstens eines der zweiten Wandsegmente mit einem vierten Haken versehen ist, der so vorgesehen ist, dass er in eine Außenwand des elektrischen Rohres eingreift.

9. Kunststoffvergossene elektrische Verbinderdose nach einem der Ansprüche 1 bis 8, **dadurch gekennzeichnet, dass** die Eckstücke entweder mit einer Zunge oder einer Aussparung versehen sind, derart dass sie beim Koppeln paarweise ineinander eingreifen.

10. Kunststoffvergossene elektrische Verbinderdose nach einem der Ansprüche 1 bis 9, **dadurch gekennzeichnet, dass** der Bodenteil Bodenwände aufweist, die abgeschrägt sind.

11. Kunststoffvergossene elektrische Verbinderdose nach einem der Ansprüche 1 bis 10, **dadurch gekennzeichnet, dass** alle Seitenwände faltbar am Bodenteil angebracht sind.

## Revendications

1. Boîte de connexion électrique (1) en matière plastique moulée ayant une partie de fond (2) et des parois latérales (3, 4, 5, 6) ainsi qu'un dessus ouvert, au moins deux desdites parois latérales pouvant être pliées d'une position sensiblement parallèle vers une position sensiblement perpendiculaire par rapport à ladite partie de fond, chacune desdites parois latérales comprenant des premiers moyens d'accouplement (7, 8, 9, 10, 11) prévus pour accoupler des parois latérales adjacentes quand elles sont dans ladite position sensiblement perpendiculaire, au moins deux desdites parois latérales comprenant des deuxièmes moyens d'accouplement (12, 13) prévus pour accoupler une autre boîte de connexion électrique, chacune desdites parois latérales comprenant des pièces de coin (7) appliquées sur ledit dessus et s'étendant à l'intérieur de ladite boîte de connexion de manière sensiblement parallèle à ladite partie de fond quand lesdites parois latérales sont dans ladite position sensiblement perpendiculaire, **caractérisée en ce que** lesdites pièces de coin font partie desdits premiers moyens d'accouplement, et lesdits deuxièmes moyens d'accouplement étant formés par des tenons et des mortaises appliqués sur les bords desdites parois latérales.

2. Boîte de connexion électrique en matière plastique moulée telle que revendiquée dans la revendication 1, **caractérisée en ce que** lesdits premiers moyens d'accouplement comprennent en outre un ensemble des premières pattes (9) appliquées sur une périphérie de ladite partie de fond et s'étendant de manière sensiblement perpendiculaire sur celle-ci dans une direction allant vers le dessus, lesdits premiers moyens d'accouplement comprennent en outre un premier ensemble de premiers crochets (8) appliqués sur une face intérieure desdites parois latérales et prévus entrer chaque fois en prise avec une desdites pattes.

3. Boîte de connexion électrique en matière plastique moulée telle que revendiquée dans la revendication 1 ou 2, **caractérisée en ce que** lesdits premiers moyens d'accouplement comprennent en outre une deuxième patte (10) appliquée sur une face intérieure d'au moins une desdites parois latérales, lesdits premiers moyens d'accouplement comprennent également un deuxième ensemble de deuxièmes crochets (11) appliqués sur ladite partie de fond et prévus pour entrer chaque fois en prise avec une desdites deuxièmes pattes.

4. Boîte de connexion électrique en matière plastique moulée telle que revendiquée dans la revendication 2 et 3, **caractérisée en ce que** lesdits deuxièmes crochets sont chaque fois appliqués entre deux desdites premières pattes situées sur une même paroi latérale et ladite deuxième patte est chaque fois appliquée entre deux desdits premiers crochets situés sur une même paroi latérale.

5. Boîte de connexion électrique en matière plastique moulée telle que revendiquée dans l'une quelconque des revendications 1 à 4, **caractérisée en ce que** lesdits tenons et mortaises sur une même paroi latérale sont appliqués en diagonale de telle manière que deux tenons et deux mortaises soient chaque fois situés aux extrémités d'une diagonale.

6. Boîte de connexion électrique en matière plastique moulée telle que revendiquée dans l'une quelconque des revendications 1 à 5, **caractérisée en ce qu'**au moins deux desdites parois latérales sont pourvues d'au moins une protubérance (15) sensiblement cylindrique s'étendant vers l'extérieur depuis ladite paroi latérale et ayant un premier diamètre, ladite protubérance étant formée par une première série de premiers segments de paroi (14) formant une paroi périphérique de ladite protubérance, au moins un desdits premiers segments de paroi étant pourvu d'un troisième crochet prévu pour entrer en prise avec une paroi extérieure d'un tube électrique à introduire dans ladite protubérance.

7. Boîte de connexion électrique en matière plastique moulée telle que revendiquée dans la revendication 5, **caractérisée en ce qu'**à l'intérieur de ladite protubérance, une deuxième série de deuxièmes segments de paroi (16) sont appliqués le long d'un segment de cercle en juxtaposition avec un premier sous-ensemble desdits premiers segments de paroi, lesdits deuxièmes segments de paroi étant positionnés de manière à former avec un deuxième sous-ensemble desdits premier segments de paroi un cercle d'un deuxième diamètre plus petit que ledit premier diamètre, lesdits premier et deuxième sous-ensembles de segments de paroi étant mutuellement exclusifs.

8. Boîte de connexion électrique en matière plastique moulée telle que revendiquée dans la revendication 7, **caractérisée en ce qu'**au moins un desdits deuxièmes segments de paroi est pourvu d'un quatrième crochet prévu pour entrer en prise avec une paroi extérieure dudit tube électrique.

9. Boîte de connexion électrique en matière plastique moulée telle que revendiquée dans l'une quelconque des revendications 1 à 8, **caractérisée en ce que** lesdites pièces de coin sont pourvues soit d'une languette soit d'un évidement de telle manière que, lors de l'accouplement, elles entrent en prise l'une avec l'autre deux par deux.

10. Boîte de connexion électrique en matière plastique moulée telle que revendiquée dans l'une quelconque des revendications 1 à 9, **caractérisée en ce que** ladite partie de fond a des parois de fond qui sont chanfreinées.

11. Boîte de connexion électrique en matière plastique moulée telle que revendiquée dans l'une quelconque des revendications 1 à 10, **caractérisée en ce que** toutes les parois latérales sont appliquées de manière pliante sur ladite partie de fond.
